(19) **Europäisches Patentamt / European Patent Office / Office européen des brevets**

(11) **EP 2 236 220 A2**

(12) **EUROPÄISCHE PATENTANMELDUNG**

(43) Veröffentlichungstag:
06.10.2010 Patentblatt 2010/40

(51) Int Cl.:
*B07C 5/342* (2006.01)   *G01N 21/85* (2006.01)
*G01N 21/958* (2006.01)

(21) Anmeldenummer: **10157151.1**

(22) Anmeldetag: **22.03.2010**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**AL BA ME RS**

(30) Priorität: **30.03.2009  AT 5012009**

(71) Anmelder: **EVK DI Kerschhaggl Gmbh
8074 Raaba (AT)**

(72) Erfinder:
• **Graze, Bernd
A-8010, Graz (AT)**
• **Fruehwirth, Josef
A-8010, Graz (AT)**
• **Seidl, Manfred
A-8200, Ludersdorf-Wilfersdorf (AT)**

(74) Vertreter: **Margotti, Herwig Franz
Schwarz & Partner
Patentanwälte
Wipplingerstrasse 30
1010 Wien (AT)**

(54) **Verfahren, Beleuchtungseinrichtung und System zum optischen Detektieren von bewegten Objekten**

(57)   Ein Verfahren zum optischen Detektieren von bewegten Objekten (3) umfasst:
- das Beleuchten des Objekts (3) entweder
mit Lichtpulsen (L1, L2), die unterschiedliche Intensitäten und/oder Pulsdauern aufweisen, oder
mit Lichtpulsen (L1, L2), die optional unterschiedliche Intensitäten und/oder Pulsdauern aufweisen, und mit Sekundärlicht (SL), das einen optisch detektierbaren Sekundäreffekt induziert;
- das Aufnehmen von Bildern des Objekts (3) bei unterschiedlicher Beleuchtung mit einem monochromatischen, zeilenweise organisierten optischen Flächensensor (5);
- das Auslesen und Zwischenspeichern von zumindest so vielen Zeilen (Z5, Z15 .. Z55) eines jeden Bildes, wie es unterschiedliche Beleuchtungen gibt, wobei die ausgelesenen Zeilen einen Zeilenabstand (d) zueinander aufweisen,
- das sequentielle Kombinieren von Zeilen (Z5, Z15 .. Z55) aus den aufgenommenen Bildern zu Kombinationszeilen (K1 - K6), wobei die miteinander kombinierten Zeilen (Z5, Z15 .. Z55) den Zeilenabstand (d) bzw. dessen Vielfaches aufweisen; und
- das Zusammensetzen der Kombinationszeilen (K1 - K6) zu einem Kombinations-Gesamtbild (11).

Fig. 3

**EP 2 236 220 A2**

**Beschreibung**

Die Erfindung betrifft ein Verfahren, eine Beleuchtungseinrichtung und ein System zum optischen Detektieren von mit einer Fördergeschwindigkeit bewegten Objekten.

Die Detektion und anschließende Sortierung von Schüttgütern mit Farbkameras ist eine gängige Methode. Eine übliche Ausführungsvariante wird beispielsweise in dem Patent AT 410847 beschrieben. Diese Technologie wird insbesondere im Recyclingbereich eingesetzt. Überwiegend erfolgt dabei eine Durchlicht-Detektion und Sortierung, bei der Glas und transparente Kunststoffprodukte aufgearbeitet werden, indem Licht durch sie hindurchgestrahlt wird, das hindurch tretende Licht von der Farbkamera aufgefangen und analysiert wird. Bei dieser Technologie sind beispielsweise Etiketten an den transparenten Glas- und Kunststoffteilen ein großes Hindernis, so dass sogar aufwändige mechanische Methoden, siehe z.B. AT 503036 B1, in einer Vorstufe des Verfahrens zu ihrer Entfernung eingesetzt werden. Zur Verbesserung der Ausbeute ist es jedoch absolut wünschenswert, dass transparente Objekte erkannt werden, obwohl sie mit nicht-transparenten Fremdstoffen, wie Etiketten behaftet sind.

Weiterhin sind heutzutage auch Leuchtstoffröhren-Systeme oder LED-basierte Beleuchtungssysteme (z.B. im Gebrauchsmuster AT 004889U1 offenbart) im Einsatz. Die Fortschritte in der optischen Technologie bieten Farbkameras mit immer höheren Zeilenabtastraten, die aber wiederum immer kürzere Beleuchtungszeiten und somit höhere Leuchtdichten zur Beleuchtung der zu detektierenden Objekte erfordert. Die erforderlichen hohen Leuchtdichten für Systeme mit 4-20 kHz Zeilenabtastraten, welche bereits Stand der Technik sind oder in naher Zukunft verfügbar sein werden, können mit Leuchtstoffröhren oder thermischen Leuchtmitteln nicht mehr erreicht werden. Es wurde daher bereits vorgeschlagen, zur Erhöhung der Leuchtdichte Systeme mit Leuchtdioden (LEDs) als Leuchtmittel auszurüsten. Als Standard auf diesem Gebiet haben sich strahlbündelnde Optiken in Kombination mit Weißlichterzeugung mittels blauer LEDs mit gelben Fluoreszenzfarbstoffen (so genannte Weißlicht-LEDs) etabliert. Aufgrund der ineffizienten Farbkonversion erfordert diese Art der Beleuchtung aber eine aktive Kühlung, welche zum Beispiel aufwändig mit Wasserkühlungen bewerkstelligt wird.

Als Standardtechnologie in Verknüpfung mit Weißlichtbeleuchtung werden heute Farbkameras mit Farbfiltern auf den optisch sensitiven Elementen (Pixeln) oder 3-Chip Kameras eingesetzt, bei denen jeweils ein Chip für eine der drei Grundfarben Rot, Grün, Blau empfindlich ist. Weiterhin wird die Anforderung an die Auflösung und damit die Anzahl der Pixel immer größer. Standard sind heute bereits über 1000 Farbtripel und Entwicklungen gehen dahin, die Grenze um eine Größenordnung zu erhöhen. Dies erfordert die Pixelgröße weiter zu verkleinern, was wiederum die Anforderungen an die Leuchtdichte der Beleuchtungseinrichtungen weiter erhöht und auch die Qualität der ohnehin fragwürdigen Farbfilter zu vermindern. Bei den 3-Chip Kameras ist die notwendige optische Aufspaltung der Lichtwege zur Separation der Farbkomponenten und die Justierung der Sensoren zueinander als kritisch zu beurteilen.

Auch mit solchen modernen Ausrüstungen ist die Erkennungsqualität aber nach wie vor nicht zufriedenstellend, insbesondere was die Unterscheidung dunkler, opaker Glas- und Kunststoffteile von Keramik, Steinen oder Porzellan betrifft. Ein bisher ungelöstes Problem stellt der unzureichende Dynamikumfang heutiger Kamerasysteme dar, der häufig zu Fehlerkennungen führt, wenn z.B. im Materialstrom farbloses Glas mit dunklem Glas und undurchsichtigen Materialien vermischt ist. Es wäre weiters auch wünschenswert, verschiedene Sorten desselben Grundmaterials unterscheiden zu können, beispielsweise Bleiglas in einem Glasstrom.

Es besteht somit nach wie vor das Bedürfnis nach einem verbesserten Verfahren zum optischen Detektieren von bewegten Objekten, das hohe Erkennungsqualität bei hohen Fördergeschwindigkeiten der zu detektierenden Objekte bietet. Ein solches Verfahren soll mit Beleuchtungseinrichtungen, vergleichsweise geringe Leuchtdichten bieten, das Auslangen finden, gleichzeitig aber auch mit hohen Leuchtdichtenverhältnissen, d.h. einem hohen Leuchtdichte-Dynamikumfang umgehen können.

Der vorliegenden Erfindung liegt die Aufgabe zugrunde ein Verfahren, eine Beleuchtungseinrichtung und ein System zum optischen Detektieren von bewegten Objekten bereitzustellen, das die oben erläuterten Nachteile des Standes der Technik überwindet.

Diese Aufgabe wird durch ein Verfahren zum optischen Detektieren von bewegten Objekten mit den kennzeichnenden Merkmalen des Anspruchs 1, eine Beleuchtungseinrichtung mit den kennzeichnenden Merkmalen des Anspruchs 11 und ein System zum optischen Detektieren von bewegten Objekten mit den kennzeichnenden Merkmalen des Anspruchs 16 gelöst. Vorteilhafte Ausgestaltungen und weitere Merkmale der vorliegenden Erfindung ergeben sich aus den Unteransprüchen und der nachfolgenden Beschreibung.

Gemäß der Erfindung wird ein Monochromsensor verwendet. Das Objekt wird mit einer Abfolge von Lichtpulsen aus zumindest einer Pulslichtquelle bestrahlt. Zusätzlich kann das Objekt mit Sekundärlicht aus einer Sekundärlichtquelle bestrahlt werden, deren Licht im Objekt einen optisch detektierbaren Sekundäreffekt induziert. Lichtpulse können unterschiedliche Intensitäten und/oder unterschiedliche Pulsdauern aufweisen.

Es sind somit die folgenden Varianten an Bestrahlung der Objekte mit Licht vorgesehen:

a) Bestrahlen der Objekte mit einer Abfolge von Lichtpulsen aus zumindest einer Pulslichtquelle, wobei Lichtpulse unterschiedliche Intensitäten und/oder unterschiedliche Pulsdauern aufweisen.

b) Bestrahlen der Objekte mit einer Abfolge von Lichtpulsen aus zumindest einer Pulslichtquelle, wobei alle Lichtpulse gleiche Intensitäten und Pulsdauern aufweisen. Zusätzliches Bestrahlen der Objekte mit Sekundärlicht aus einer Sekundärlichtquelle, deren Licht in Objekten einen optisch detektierbaren Sekundäreffekt induziert.

c) Bestrahlen der Objekte mit einer Abfolge von Lichtpulsen aus zumindest einer Pulslichtquelle, wobei sich zumindest einige der Lichtpulse in der Lichtintensität und/oder der Pulsdauer voneinander unterscheiden. Zusätzliches Bestrahlen der Objekte mit Sekundärlicht aus einer Sekundärlichtquelle, deren Licht in Objekten einen optisch detektierbaren Sekundäreffekt induziert.

Bei jedem Lichtpuls wird mit dem monochromatischen Flächensensor ein Bild des Objekts aufgenommen und zwischengespeichert. Bei den Bestrahlungsvarianten b und c wird vom monochromatischen Flächensensor zusätzlich in Pausen zwischen Lichtpulsen bei eingeschalteter Sekundärlichtquelle ein Bild des Objekts aufgenommen.

Von jedem aufgenommenen Bild werden Zeilen aus dem monochromatischen optischen Flächensensor ausgelesen. Diese ausgelesenen Zeilen weisen einen Zeilenabstand zueinander auf, um den oder ein Vielfaches dieses Zeilenabstandes die Projektion des Objekts auf den Flächensensor zwischen aufeinanderfolgenden Lichtpulsen und gegebenenfalls Sekundärlichtaufnahmen weiterwandert. Der Zeilenabstand bzw. dessen Vielfaches ist somit proportional zu jener Strecke, um die sich das Objekt zwischen aufeinanderfolgenden Lichtpulsen und gegebenenfalls Sekundärlichtaufnahmen mit der Fördergeschwindigkeit fortbewegt. Es wird anerkannt werden, dass bei dieser Bildverarbeitung für die Auswertung nur einige Zeilen eines jeden Bildes benötigt werden, was die zu verarbeitende Datenmenge gering hält.

Um die Auswertung der Bilder zu verbessern, werden vorzugsweise zumindest so viele Zeilen eines jeden Bildes ausgelesen und zwischengespeichert, wie es in Intensität und/oder Pulsdauer und/oder Farben unterschiedliche Lichtpulse und gegebenenfalls Sekundärlicht gibt.

Es sei angemerkt, dass das Sekundärlicht in den meisten Anwendungsfällen wesentlich länger leuchten gelassen wird als die Lichtpulse. Die Sekundärlichtquelle kann intermittierend betrieben werden oder darüber hinaus sich im Dauerbetrieb befinden. Damit entfallen für die technische Realisierung einer Sekundärlichtquelle wesentliche Anforderungen, die für Impulslichtquellen essentiell sind. Notwendige Vorwärmzeiten, und langsames Schaltverhalten sind Eigenschaften, die eine Lichtquelle für den Betrieb als Impulslichtquelle disqualifizieren. Für den Betrieb als Sekundärlichtquelle sind solche Eigenschaften durchaus akzeptabel. Durch den möglichen längeren Betrieb der Sekundärlichtquelle können auch Sekundäreffekte genutzt werden, die einer längeren Anregung bedürfen, als es durch Impulslichtquellen möglich wäre. Im intermittierenden Betrieb dauert der eingeschaltete Zustand der Sekundärlichtquelle vorzugsweise ein Vielfaches der Lichtdauer des längsten Lichtpulses an.

Die zwischengespeicherten Zeilen aus bei Beleuchtung durch die Lichtpulse und gegebenenfalls Beleuchtung durch die Sekundärlichtquelle aufgenommenen Bildern werden sequentiell zu Kombinationszeilen kombiniert, wobei die miteinander kombinierten Zeilen zueinander den genannten Zeilenabstand bzw. dessen Vielfaches aufweisen. Die Kombinationszeilen können zu einem Kombinations-Gesamtbild zusammengesetzt werden.

Durch dieses erfindungsgemäße Verfahren werden Bilder erhalten, die bei unterschiedlichen Beleuchtungen aufgenommen wurden. Es ist dadurch möglich, einzelne Zeilen dieser Bilder so miteinander zu kombinieren, dass Kombinationszeilen mit optimaler Bildinformation erhalten werden. Das Kombinieren kann dabei z.B. das Addieren von Zeileninformationen umfassen, und/oder Höher- bzw. Geringer-Gewichten von Zeilen eines Bildes in Bezug auf Zeilen anderer Bilder, wobei das Höher- bzw. Geringer-Gewichten bis hin zum Auswählen von Zeilen eines Bildes und Verwerfen von Zeilen anderer Bilder reichen kann, z.B. bei stark überbelichteten oder unterbelichteten Bildern.

Durch sehr kurze bzw. wenig intensive Lichtpulse ist es möglich, helle Scherben zu erfassen, ohne den Flächensensor zu übersteuern. Durch lange und/oder intensive Lichtpulse können dunkle Gläser von Porzellan und Stein unterschieden werden. Es ist dadurch z.B. möglich, mit hoher Genauigkeit Gläser von stark unterschiedlicher Lichtdurchlässigkeit (von völlig durchlässig bis sehr opak und dunkel gefärbt) in einem Materialstrom zu erkennen, insbesondere auch, wenn das gesamte Lichtdurchlässigkeitsverhältnis aller Gläser größer ist als der Dynamikumfang des monochromatischen optischen Flächensensors.

Bei Verwendung der Sekundärlichtquelle, deren Licht in Objekten einen optisch detektierbaren Sekundäreffekt induziert, wird eine zusätzliche Information erhalten, die zur noch besseren Materialerkennung dient.

In einer Weiterbildung der Erfindung weist das Licht der einzelnen Lichtpulse unterschiedliche Wellenlängen auf. Im Anwendungsfall der Verwendung von Pulslichtquellen, welche Licht im sichtbaren Wellenlängenbereich abstrahlen, entspricht jeder Lichtpuls einer Lichtfarbe. Diese Ausführungsform bietet den Vorteil, dass jede Farbkomponente direkt auf den Sensor gelangt und dort die Signale erzeugt. Im Gegensatz dazu sind bei nach dem Stand der Technik verwendeten Farbfilterkameras und RGB-Beleuchtung die blauen und grünen Pixel für das rote Licht und die rote Signalkomponente ohne jede Bedeutung, da das Licht im Farbfilter sowieso absorbiert wird. Entsprechendes gilt für die anderen Farben. Geht man zusätzlich von den nicht idealen technischen Umsetzungen der Farbfilter bei sehr kleinen Pixelgrößen aus, welche nur ca. 50 % der Lichtquanten bis zum Sensor gelangen lassen, ergibt sich gemäß der Erfindung eine typischerweise auf ein Sechstel reduzierte erforderliche Leuchtdichte der Beleuchtung. Eine weitere deutliche Reduzierung der Lichtanforderung wird durch den erfindungsgemäß verwendeten zweidimensionalen Sensor erreicht, indem bei jedem Lichtpuls bzw. gegebenenfalls bei Sekundärlicht mehrere Zeilen belichtet werden und anschließend die Zeilen sequentiell zusammengesetzt werden.

Das Zusammensetzen der Zeilen kann erfolgen, indem Zeilen aus Bildern, die bei aufeinanderfolgender Beleuchtung durch in Intensität und/oder Pulsdauer und/oder Farben unterschiedliche Lichtpulse und gegebenenfalls Sekundärlicht aufgenommen wurden, zu Kombinationszeilen sequentiell miteinander kombiniert werden, wobei die zu kombinierenden Zeilen zueinander den definierten Zeilenabstand oder ein Vielfaches dieses Zeilenabstands aufweisen.

Alternativ oder ergänzend werden jene monochromatischen Zeilen sequentiell zu Zwischenzeilen kombiniert, die bei gleichen Beleuchtungen zu verschiedenen Zeitpunkten aufgenommen wurden, unter Berücksichtigung des zeitlichen Abstandes der Aufnahmezeitpunkte und des Zeilenabstandes innerhalb der Abfolgen. Anschließend werden jene Zwischenzeilen, die unterschiedlichen Beleuchtungen zugeordnet sind, unter Berücksichtigung des Zeilenabstandes zu Kombinationszeilen kombiniert. Die Kombinationszeilen wiederum werden zu einem Kombinations-Gesamtbild zusammengesetzt.

Hohe Qualität der Objektdetektion und hohe Verarbeitungsgeschwindigkeit werden erzielt, wenn zur Beleuchtung schnell schaltende, schmalbandige bis monochromatische Lichtquellen, vorzugsweise Leuchtdioden oder Laser, verwendet werden.

In einer bevorzugten Ausführungsform der Erfindung ist die Sekundärlichtquelle eine UV- oder UV-C-Lichtquelle, die Objekte, wie z.B. Bleiglas, zur Lumineszenz anregt. Diese Objekte können dadurch in einem Materialstrom von anderen Objekten unterschieden werden, die die gleiche Farbe besitzen, aber nicht lumineszieren können.

In einer alternativen Ausführungsform der Erfindung ist die Sekundärlichtquelle eine Lichtquelle mit hohem Wärmestrahlungsanteil, die Objekte zur Wärmeabsorption anregt. Man kann dadurch z.B. materialspezifische Abkühleffekte sichtbar machen, wobei der Flächensensor in der Lage sein muss, Wärmebilder zu erfassen.

Durch Anstrahlen der Objekte mit durch Filtern erhaltenem schmalbandigen Licht wird die Erkennungsquote erhöht, da weniger Störlicht auf die Objekte auftrifft.

Die vorliegende Erfindung eignet sich insbesondere für die Durchlichtbeleuchtung. Mit Durchlichtbeleuchtung werden transparente oder semitransparente Objekte detektiert bzw. von lichtundurchlässigen Objekten unterschieden.

Eine erfindungsgemäße Beleuchtungseinrichtung zur Bestrahlung von Objekten, die mit einer Fördergeschwindigkeit bewegt werden, umfasst zumindest eine Pulslichtquelle und optional zumindest eine Sekundärlichtquelle, deren Licht in Objekten einen optisch detektierbaren Sekundäreffekt induziert. Ein Gehäuse, in dem alle Lichtquellen aufgenommen sind, weist einen Lichtauslass zum Durchtritt des von den Lichtquellen generierten Lichts auf, wobei der Lichtauslass durch zumindest ein Filterglas abgedeckt ist, das unerwünschte Wellenlängenbereiche des durch die Lichtquellen erzeugten Lichts mit Ausnahme der für die Identifizierung notwendigen Wellenlängenbereiche breitbandig dämpft. Mit dieser Beleuchtungseinrichtung ist eine hohe Erkennungsgenauigkeit der Objekte erzielbar, da Störlicht weitgehend ausgeschaltet wird. Für eine technische Realisierung der Erfindung beschränkt sich dadurch die Auswahl an möglichen Lichtquellen nicht auf Leuchtmittel mit schmalbandiger Abstrahlcharakteristik.

Um sowohl Materialien mit hoher Lichtdurchlässigkeit als auch solche mit sehr geringer Lichtdurchlässigkeit detektieren zu können, ist vorgesehen, dass die Pulslichtquellen Lichtpulse unterschiedlicher Intensitäten und/oder unterschiedlicher Pulsdauern erzeugen. Für hohe Erkennungsgeschwindigkeiten ist es günstig, wenn die Pulslichtquellen schnell schaltende, schmalbandige bis monochromatische Lichtquellen, vorzugsweise Leuchtdioden oder Laser, sind.

Um Materialien zur Lumineszenz anzuregen ist vorgesehen, dass die Sekundärlichtquelle eine UV- oder UV-C-Lichtquelle ist.

Damit bei der Erkennung der Objekte Farbinformation über die Objekte einbezogen werden kann, ist in einer Ausführungsform der Beleuchtungseinrichtung vorgesehen, dass die Lichtquellen Licht von unterschiedlicher Farbe erzeugen, um damit die Objekte zu bestrahlen.

Die Vorrichtung zum optischen Detektieren von bewegten Objekten umfasst eine Fördereinrichtung zur Förderung der Objekte, einen monochromatischen optischen Flächensensor, z.B. CMOS-Sensor, der eine Vielzahl von Sensorzeilen aufweist, und einen Rechner zur Steuerung des Flächensensors und der Beleuchtungseinrichtung, wobei der Rechner dazu ausgebildet ist, das oben beschriebene erfindungsgemäße Verfahren zur Detektion von Objekten abzuarbeiten.

Für den Durchlichtbetrieb des Systems ist vorgesehen, dass die Fördereinrichtung lichtdurchlässig ist und die Beleuchtungseinrichtung und der Flächensensor auf gegenüberliegenden Seiten der Fördereinrichtung positioniert sind. Das erfindungsgemäße System ist jedoch nicht auf den Durchlichtbetrieb beschränkt. Insbesondere kann es zweckmäßig sein, mit den Sekundärlichtquellen die Objekte von derselben Seite der Fördereinrichtung zu bestrahlen, auf der sich die Kamera befindet, d.h. die Sekundärlichtquellen im Auflichtbetrieb zu verwenden. Aber auch Pulslichtquellen können auf der Seite der Kamera angeordnet werden. Insbesondere ist es auch möglich, die gesamte oben beschriebene Beleuchtungseinrichtung auf Seite der Kamera zu positionieren.

Das erfindungsgemäße System kann zur Materialsortierungsanlage ausgebaut werden, indem der Rechner zur Ansteuerung einer Sortieranlage in Abhängigkeit von der Detektion von zu sortierenden Objekten ausgebildet ist.

Die Erfindung wird nun anhand nicht einschränkender Ausführungsbeispielen unter Bezugnahme auf die Zeichnungen näher erläutert. In den Zeichnungen zeigen:

Fig. 1 ein schematisches Blockschaltbild eines erfindungsgemäßen Systems zum optischen Detektieren und nachfolgendem Sortieren von mit einer Fördergeschwindigkeit bewegten Objekten;

Fig. 2 ein Dämpfungsdiagramm in Abhängigkeit von der Wellenlänge eines in einer erfindungsgemäßen Beleuchtungseinrichtung verwendeten Filterglases;

Fig. 3 einen ersten Weg-Zeit-Verlauf von Bildaufnahmen durch einen optischen Flächensensor bei Beleuchtung durch eine zeitliche Abfolge von Lichtpulsen und Sekundärlicht sowie den entsprechenden Wegverlauf des Objekts in Förderrichtung;

Fig. 4 einen zweiten Weg-Zeit-Verlauf von Bildaufnahmen durch einen optischen Flächensensor bei Beleuchtung durch eine zeitliche Abfolge von Lichtpulsen und Sekundärlicht sowie den entsprechenden Wegverlauf des Objekts in Förderrichtung;

Fig. 5 einen dritten Weg-Zeit-Verlauf von Bildaufnahmen durch einen optischen Flächensensor bei Beleuchtung durch eine zeitliche Abfolge von Lichtpulsen und Sekundärlicht sowie den entsprechenden Wegverlauf des Objekts in Förderrichtung.

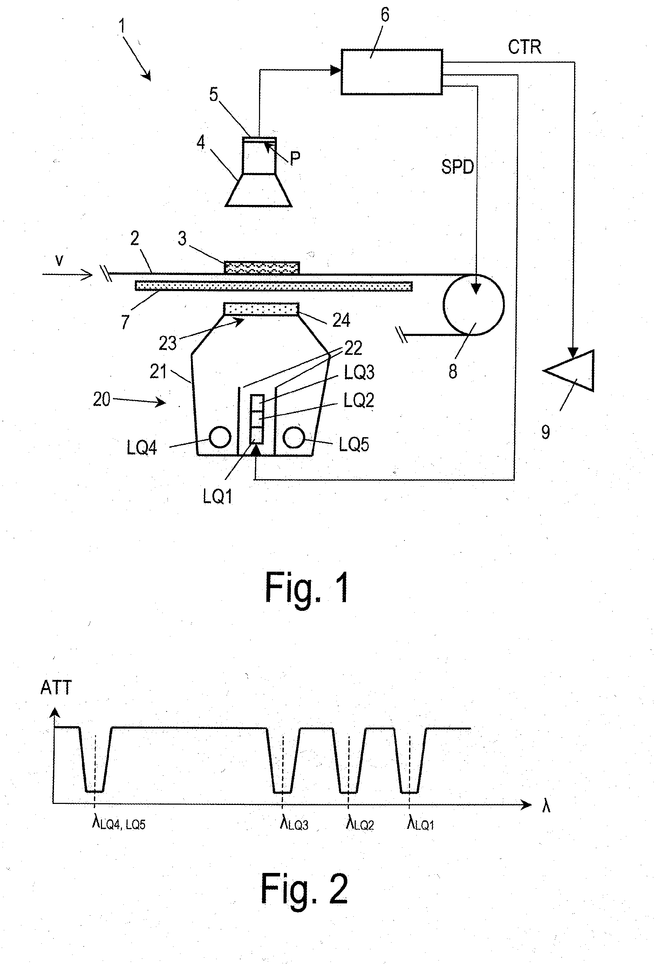

Unter Bezugnahme auf Fig. 1 wird nun eine beispielhafte Ausführungsform eines erfindungsgemäßen Systems 1 zum optischen Detektieren von mit einer Fördergeschwindigkeit v bewegten Objekten 3 näher erläutert. Das System 1 umfasst eine Fördereinrichtung 2 in Form eines Förderbands. Alternativ käme beispielsweise auch eine Förderrutsche in Betracht. Die Fördereinrichtung 2 wird von einer Antriebswalze 8 mit einer vorgegebenen Fördergeschwindigkeit v angetrieben. Auf der Fördereinrichtung 2 wird ein Objekt 3 befördert, das durch das System 1 detektiert werden soll. Bei dem Objekt handelt es sich beispielsweise um ein transparentes Glas- oder Kunststoffstück, das aus einem Materialstrom aussortiert werden soll. Alternativ dazu kann das Objekt 3 aber auch ein farbiges, opakes Glas- oder Kunststoffstück sein, oder ein undurchsichtiges Teil, z.B. ein Stein, der aus einem Materialstrom aus Glas aussortiert werden soll. Die Anwendungen für das erfindungsgemäße System 1 sind aber nicht auf die hier erläuterten Beispiele beschränkt. Oberhalb der Fördereinrichtung 2 befindet sich eine Kamera 4 mit einem monochromatischen (Schwarz/Weiß) Flächensensor 5 zur Erfassung von durch die Optik der Kamera 4 auf die Oberfläche des Flächensensors 5 gestrahlten Projektionen P des Objekts 3. Zweckmäßig ist die optische Achse der Kamera 4 im rechten Winkel auf die Fördereinrichtung 2 gerichtet. Es sei an dieser Stelle erwähnt, dass in der Praxis natürlich viele Objekte 3 gleichzeitig detektiert werden, und dass zur feineren Unterscheidung meist eine Vielzahl von Kameras 4 quer zur Förderrichtung der Fördereinrichtung 2 angeordnet ist. Für die Zwecke der Erläuterung der Erfindung wird aber nur auf ein Objekt 3 und eine Kamera 4 Bezug genommen.

Zur Beleuchtung des Objekts 3 ist eine erfindungsgemäße Beleuchtungseinrichtung 20 vorgesehen. Die Beleuchtungseinrichtung 20 umfasst ein Gehäuse 21, in dem drei Pulslichtquellen LQ1, LQ2, LQ3 und zwei Sekundärlichtquellen LQ4, LQ5 angeordnet sind. Die Pulslichtquellen LQ3, LQ2, LQ3 sind von den Sekundärlichtquellen LQ4, LQ5 durch optionale Trennwände 21 getrennt. Die Verwendung der Trennwände 21 zwischen den unterschiedlichen Lichtquellen ist für das Detektieren von Objekten nicht ausschlaggebend. Wenn jedoch unterschiedliche Filtergläser für die Filterung unerwünschter Lichtanteile der unterschiedlichen Lichtquellen verwendet werden, kann die Filterung durch Trennwände vereinfacht werden.

Als Pulslichtquellen LQ1, LQ2, LQ3 werden schnell schaltende, schmalbandige bis monochromatische Lichtquellen, vorzugsweise Leuchtdioden oder Laser, verwendet. Die Pulslichtquellen LQ1, LQ2, LQ3 können alle dieselbe Farbe aufweisen (z.B. weiß) oder können Licht von unterschiedlicher Farbe ausstrahlen, z.B. rot, grün und blau.

Bei den Sekundärlichtquellen LQ4, LQ5 handelt es sich bei diesem Ausführungsbeispiel um Leuchtstoffröhren, die Licht im UV- oder UV-C-Bereich ausstrahlen. Mit UV-Licht ist es z.B. möglich, Bleiglas zum Lumineszieren zu bringen; dieser Sekundäreffekt ist durch die Kamera 4 detektierbar. Ein anderer nutzbarer Sekundäreffekt ist die Detektion des Abkühlverhaltens des Objekts 3. Dazu muss der Flächensensor 5 in der Lage sein, Wärmebilder aufzunehmen, und als Sekundärlichtquellen LQ4, LQ5 werden zweckmäßig Infrarotlampen verwendet, die das Objekt 3 zur Wärmeabsorption anregen.

In einer Variante der Beleuchtungseinrichtung 20 können mit den Pulslichtquellen LQ1, LQ2, LQ3 Lichtpulse unterschiedlicher Intensitäten und/oder unterschiedlicher Pulsdauern erzeugt werden. Pulse unterschiedlicher Intensitäten können beispielsweise generiert werden, indem unterschiedliche viele (gleichfarbige) Pulslichtquellen LQ1, LQ2, LQ3 gleichzeitig angesteuert werden. Die Pulslichtquellen LQ1, LQ2, LQ3 und die Sekundärlichtquellen LQ4, LQ5 werden optional durch einen unten näher erläuterten Rechner 6 angesteuert. Man beachte, dass aus Anschauungsgründen in Fig. 1 die Pulslichtquellen LQ1, LQ2, LQ3 übereinander dargestellt sind. In der Praxis liegen sie aber waagrecht nebeneinander und sind zweckmäßig in Leuchtenprofile integriert, die quer über die Fördereinrichtung 2 angeordnet sind.

Das Gehäuse 21 weist einen auf die Fördereinrichtung 2 gerichteten Lichtauslass 23 auf, der durch ein Filterglas 24 abgedeckt ist. Das Filterglas 24 dämpft breitbandig Licht, mit Ausnahme von Lichtanteilen mit jenen Wellenlängen der im Gehäuse 21 angeordneten Lichtquellen LQ1 bis LQ5, die für die Objektidentifizierung ausschlaggebend sind. Das Dämpfungsverhalten des Filterglases 24 ist im Diagramm von Fig. 2 dargestellt, unter der beispielhaften Annahme, dass die Pulslichtquellen LQ1, LQ2, LQ3 rotes, grünes bzw. blaues Licht ausstrahlen und die Sekundärlichtquellen LQ4, LQ5 überwiegend UV-Licht ausstrahlen. Das Diagramm zeigt die Dämpfung ATT in Abhängigkeit von der Wellenlänge $\lambda$ des Lichts. Man erkennt, dass bei Licht mit den Wellenlängen $\lambda$(LQ1), $\lambda$(LQ2) $\lambda$(LQ3), $\lambda$(LQ4, LQ5) die Dämpfungswirkung des Filterglases gering ist, im restlichen Wellenlängenbereich aber hoch.

Das erfindungsgemäße System 1 ist für den Betrieb im Durchlichtverfahren vorgesehen, wofür die Beleuchtungseinrichtung unterhalb der Fördereinrichtung 2 angeordnet ist und das Licht nach oben strahlt, und die Kamera 4 oberhalb der Fördereinrichtung 2 angeordnet ist und das durch das Objekt 3 durchgehende Licht erfasst. Für das Durchlichtverfahren ist es natürlich erforderlich, dass die Fördereinrichtung 2 transparent ist, z.B. ein Förderband aus transparentem Kunststoff aufweist. Eine optionale Diffusorplatte 7 dient zur Vergleichmäßigung des von der Beleuchtungseinrichtung 20 gelieferten Lichts.

Der monochromatische optische Flächensensor 5 ist als Array von Sensorpunkten ausgeführt, die in Zeilen und Spalten angeordnet sind (typischerweise 1024 x 1024 Pixel), wobei die Helligkeitssignale der Pixel zeilenweise auslesbar sind. In einer bevorzugten Ausführungsform ist der Flächensensor 5 als CMOS-Sensor ausgeführt. Die Helligkeitswerte des Flächensensors 5 werden zeilenweise von einem Rechner 6 ausgelesen, zwischengespeichert und gemäß dem nachfolgend beschriebenen erfindungsgemäßen Detektionsverfahren ausgewertet. Das Resultat der Auswertung ist in diesem Ausführungsbeispiel einerseits ein Steuer-Ausgangssignal CTR, das zumindest eine nachfolgende Sortiereinrichtung 8 ansteuert, und andererseits ein Geschwindigkeitsregelsignal SPD, das die Geschwindigkeit der Antriebswalze 8 nachjustiert.

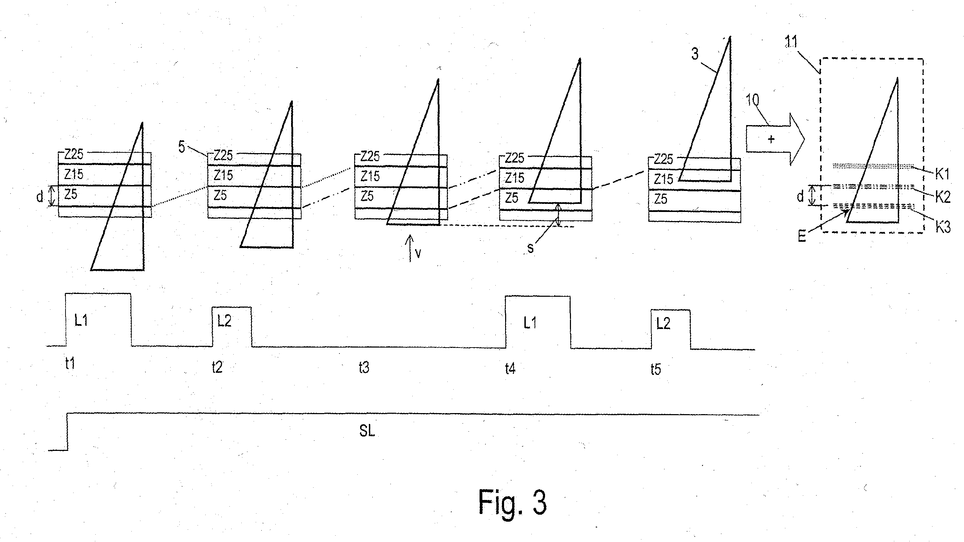

Als nächstes wird unter Bezugnahme auf Fig. 3 das im optischen Detektionssystem 1 abgearbeitete erfindungsgemäße Verfahren zum optischen Detektieren von Objekten 3 erklärt. Fig. 3 zeigt zu verschiedenen Zeitpunkten t1, t2, t3, t4, t5 Draufsichten des monochromatischen Flächensensors 5, bei dem zur Vereinfachung der Darstellung angenommen wird, dass er lediglich 30 Sensorzeilen aufweist. Fig. 3 zeigt weiters den Verlauf des Wegs des Objekts 3 in Förderrichtung (bzw. genau genommen dessen Projektion auf die Sensoroberfläche) zu den Zeitpunkten t1, t2, t3, t4, t5. Für die nachfolgende Erklärung genügt die vereinfachende Annahme, dass die Umrisse des echten Objekts 3 und seiner Projektion durch die Optik der Kamera 4 auf die Oberfläche des Sensors 5 in der Zeichnung zusammenfallen.

Gemäß der Erfindung wird das Objekt 3 zu den Zeitpunkten t1, t2, t4, t5 mit einer Abfolge von jeweils einem Lichtpuls L1, L2 bestrahlt. Lichtpuls L1 hat eine längere Pulsdauer als Lichtpuls L2. Außerdem ist die Intensität des Lichtpulses L1 größer als jene des Lichtpulses L2. Die Lichtpulse L1 und L2 weisen entweder dieselbe Farbe oder unterschiedliche Farben auf. Lichtpuls L1 wird zu den Zeitpunkte t1 und t4 ausgestrahlt, Lichtpuls L2 zu den Zeitpunkten t2 und t5. Mit dem breiten, energieintensivem Lichtpuls L1 können z.B. Objekte 3, die aus sehr dunkle Glasscherben bestehen, durchleuchtet werden. Mit dem schwachen und kurzen Lichtpuls L2 können Objekte 3, die aus transparentem Glas oder Kunststoff bestehen, durchleuchtet werden, ohne den Flächensensor 5 zu übersteuern.

Als optionales, aber vorteilhaftes Merkmal des Systems 1 wird zusätzlich Information aus einem an dem Objekt 3 detektierbaren Sekundäreffekt gewonnen. Dazu werden zum Zeitpunkt t1 die Sekundärlichtquellen LQ4, LQ5 eingeschaltet, die ein Sekundärlicht SL liefern, und im Dauerbetrieb aufrechterhalten. Zum Zeitpunkt t3 tritt eine Pulslichtpause auf, das Sekundärlicht SL ist jedoch weiterhin aktiv, und bildet daher die Beleuchtung für ein zum Zeitpunkt t3 vom Flächensensor 5 aufgenommenes Bild. Das Sekundärlicht SL erzeugt im Objekt 3 einen optisch detektierbaren Sekundäreffekt. Wenn z.B. das Sekundärlicht SL aus UV-Licht besteht, wird ein Bleiglas enthaltendes Objekt 3 lumineszieren. Das Lumineszieren wird vom Flächensensor 5 aufgenommen. Die Abfolge der Lichtpulse L1, L2, und Pulspausen, in denen Bilder bei Sekundärlicht SL aufgenommen werden, ist beliebig, wiederholt sich jedoch periodisch gleichbleibend. Im dargestellten Ausführungsbeispiel tritt die periodische Wiederholung dieser Abfolge zum Zeitpunkte t4 mit dem zweiten Lichtpuls L1 ein.

Zu den Zeitpunkten t1, t2, t3, t4, t5 wird vom Flächensensor 5 jeweils ein Bild des Objekts 3 aufgenommen, wie ersichtlich unter verschiedenen Beleuchtungen durch die Lichtpulse L1 und L2 bzw. das Sekundärlicht SL. Von diesem jeweiligen Bild werden aber nicht alle Zeilen vom Rechner 6 ausgelesen, sondern nur bestimmte, und zwar zumindest so viele Zeilen eines jeden Bildes, wie es unterschiedliche Lichtpulse gibt, in diesem Beispiel also drei Zeilen. Weiters müssen die ausgelesenen Zeilen einen Zeilenabstand d zueinander aufweisen, der jenem Abstand entspricht, um den die Projektion des Objekts 3 auf den Flächensensor 5 zwischen aufeinanderfolgenden Lichtpulsen weiterwandert. Dieser Zeilenabstand d ist proportional zu jener Strecke s, um die sich das reale Objekt 3 zwischen aufeinanderfolgenden Lichtpulsen mit der Fördergeschwindigkeit v in Förderrichtung fortbewegt. Es sei im Einklang mit praktischen Umsetzungen der Erfindung angenommen, dass die Zeitabstände zwischen den Zeitpunkten t1, t2, t3, t4, t5, zu denen die Lichtpulse L1, L2 und das Sekundärlicht SL in Pulspausen erfolgen, jeweils gleich sind und dass die Fördergeschwindigkeit v gleichförmig bzw. so langsam veränderlich ist, dass zwischen den Zeitpunkten t1, t2, t3, t4, t5 von gleichförmiger Fördergeschwindigkeit ausgegangen werden kann. Unter diesen Bedingungen ergibt sich, dass der Zeilenabstand d konstant ist und im vorliegenden Ausführungsbeispiel mit 10 Zeilen festgelegt wurde. Es werden also beispielsweise aus jedem Bild die Zeilen Z5, Z15 und Z25 ausgelesen und zwischengespeichert.

Anschließend werden im Rechner 6 mittels eines Kombinationsalgorithmus 10 die zwischengespeicherten Zeilen aus den bei den zu den Zeitpunkten t1, t2, t3, t4 und t5 bei Beleuchtung mit unterschiedlichen Lichtpulsen L1, L2 bzw. Sekundärlicht SL aufgenommenen Bilder miteinander zu Kombinationszeilen K1, K2, K3 kombiniert, wobei berücksichtigt wird, dass sich zwischen den einzelnen Bildern die Projektion des Objekts 3 auf den Sensor 5 jeweils um den Zeilenabstand d weiterbewegt hat. Dementsprechend werden also die Zeile Z5 des bei Beleuchtung durch den Lichtpuls L1 zum Zeitpunkt t1 aufgenommenen Bildes mit der Zeile Z15 des bei Beleuchtung durch den Lichtpuls L1 zum Zeitpunkt t2 aufgenommenen Bildes und der Zeile Z25 des bei Sekundärlicht SL zum Zeitpunkt t3 aufgenommenen Bildes zur Kombinationszeile K1 kombiniert. "Kombinieren" wie hierin verwendet kann addieren der Zeileninformation umfassen, kann aber auch Auswählen von einer oder Überlagern von zwei Zeileninformationen umfassen. Wenn die Lichtpulse L1, L2 unterschiedliche Farben umfassen, so kann jede der Zeilen, Z5, Z15 als Farbkanal für eine andere Farbe angesehen werden. Wird dieser Ansatz auf drei unterschiedlich, nämlich rot, grün bzw. blau gefärbte Lichtpulse erweitert, so enthält die resultierende Kombinationszeile K1 die Farbinformation eines RGB-Bildes. In analoger Weise werden die Zeile Z5 vom Zeitpunkt t2, die Zeile Z15 vom Zeitpunkt t3 und die Zeile 25 vom Zeitpunkt t4 miteinander zur Kombinationszeile K2 kombiniert. Ebenso werden die Zeile Z5 vom Zeitpunkt t3, die Zeile Z15 vom Zeitpunkt t4 und die Zeile Z25 vom Zeitpunkt t5 miteinander zur Kombinationszeile K3 kombiniert. Dieses Verfahren wird fortgesetzt, bis alle Kombinationszeilen ermittelt sind, die jeweils einen linearen Abschnitt des Objekts 3 quer zu seiner Förderrichtung darstellen. Die Kombinationszeilen werden zu einem Kombinations-Gesamtbild 11 zusammengesetzt, das in Bezug auf Sortierkriterien überprüft wird. Wenn das Kombinations-Gesamtbild 11 die Sortierkriterien erfüllt, wird das Steuersignal CTR generiert. Es sei erwähnt, dass die Kombinationszeilen K1, K2, K3 etc. des Kombinations-Gesamtbildes 11 voneinander jeweils den Zeilenabstand d aufweisen. Für eine höhere Auflösung ist es erforderlich aus jedem Bild mehr Zeilen auszulesen und/oder die Zeitabstände zwischen den einzelnen Lichtpulsen zu verkürzen.

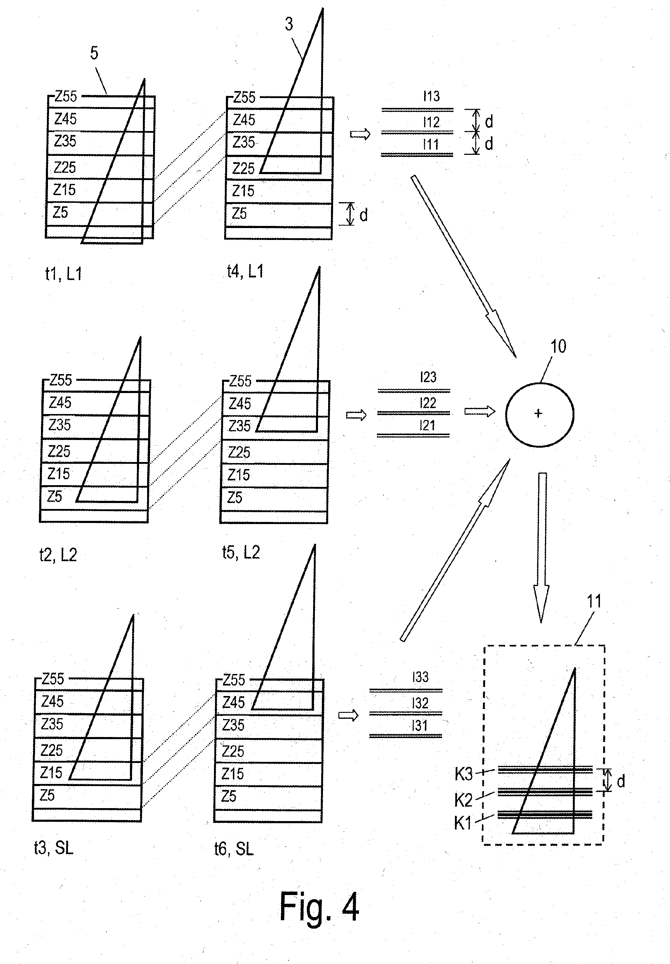

Anhand der Diagramme und Darstellungen von Fig. 4 wird nun gezeigt, wie mit dem erfindungsgemäßen Verfahren die zur Beleuchtung des Objekts 3 nötige Lichtstärke auf einen Bruchteil reduziert werden kann. Die Darstellung von Fig. 4 entspricht jener von Fig. 3 mit dem Unterschied, dass zwei Abfolgen (t1 - t3; t4 - t6) von Lichtpulsen L1, L2 und Sekundärlicht SL mit unterschiedlichen Farben R, G, B dargestellt sind und dass pro aufgenommenem Bild die doppelte Anzahl an Zeilen, als es unterschiedliche Lichtpulse bzw. Sekundärlicht zur Beleuchtung gibt, d.h. sechs Zeilen, ausgelesen werden. Es sind dies die Zeilen Z5, Z15, Z25, Z35, Z45, Z55, die jeweils einen Zeilenabstand d von 10 Zeilen aufweisen, der wie oben beschrieben ermittelt wurde. Im Unterschied zum oben anhand der Fig. 3 beschriebenen Verfahren werden bei der erfindungsgemäßen Variante gemäß Fig. 4 zunächst jene Zeilen der beiden Beleuchtungsabfolgen unter Berücksichtigung des Weiterwanderns der Projektion des Objekts 3 von Abfolge zu Abfolge miteinander addiert, die bei Beleuchtung mit gleichartigen Lichtpulsen bzw. bei Sekundärlicht aufgenommen wurden. Aus Gründen der Minimierung des Rechenaufwands im Rechner 6 wurden Pause zwischen dem Ende einer Beleuchtungsabfolge und dem Beginn der nächsten Beleuchtungsabfolge auf dieselbe Dauer festgelegt wie der Zeitabstand zwischen den einzelnen Bildaufnahmen innerhalb einer Beleuchtungsabfolge. Der Zeilenabstand zwischen zwei Abfolgen beträgt somit 30 Zeilen. Das heißt, dass folgende Zeilenadditionen vorgenommen werden:

　　Zeile Z5 vom Zeitpunkt t1 und Zeile Z35 vom Zeitpunkt t4 zu Zwischenzeile I11;
　　Zeile Z15 vom Zeitpunkt t1 und Zeile Z45 vom Zeitpunkt t4 zu Zwischenzeile I12;
　　Zeile Z25 vom Zeitpunkt t1 und Zeile Z55 vom Zeitpunkt t4 zu Zwischenzeile I13;
　　Zeile Z5 vom Zeitpunkt t2 und Zeile Z35 vom Zeitpunkt t5 zu Zwischenzeile I21;
　　Zeile Z15 vom Zeitpunkt t2 und Zeile Z45 vom Zeitpunkt t5 zu Zwischenzeile I22;
　　Zeile Z25 vom Zeitpunkt t2 und Zeile Z55 vom Zeitpunkt t5 zu Zwischenzeile I23;
　　Zeile Z5 vom Zeitpunkt t3 und Zeile Z35 vom Zeitpunkt t6 zu Zwischenzeile I31;
　　Zeile Z15 vom Zeitpunkt t3 und Zeile Z45 vom Zeitpunkt t6 zu Zwischenzeile I32;
　　Zeile Z25 vom Zeitpunkt t3 und Zeile Z55 vom Zeitpunkt t6 zu Zwischenzeile I33;

Die Zwischenzeilen I11, I12, I13 enthalten nur Helligkeitsinformation von bei Beleuchtung durch den intensiven Lichtpuls L1 aufgenommenen Bildern.
Die Zwischenzeilen I21, I22, I23 enthalten nur Helligkeitsinformation von bei Beleuchtung durch den kurzen, schwachen Lichtpuls L2 aufgenommenen Bildern.
Die Zwischenzeilen I31, I32, I33 enthalten nur Helligkeitsinformation von bei Sekundärlicht SL aufgenommenen Bildern.

In weiterer Folge werden die Zwischenzeilen unterschiedlicher Beleuchtung unter Berücksichtigung des Zeilenabstands d gemäß dem Additionsalgorithmus 10 (analog wie in Fig. 3) zu Kombinationszeilen K1, K2, K3 etc. zusammengesetzt. Beispielsweise wird die Kombinationszeile K1 aus den Zwischenzeilen I11, I22, I33 zusammengesetzt. Für die Kombinationszeilen K2 und K3 werden die Zwischenzeilen I12 und I13 verwendet, für die übrigen Kombinationszeilen müsste jedoch auf früher ermittelte oder zukünftige Zwischenzeilen zugegriffen werden, die aus Gründen der Übersichtlichkeit in Fig. 4 nicht dargestellt sind. Die Kombinationszeilen K1, K2, K3 etc werden zu einem Kombinations-Gesamtbild 11 zusammengesetzt.

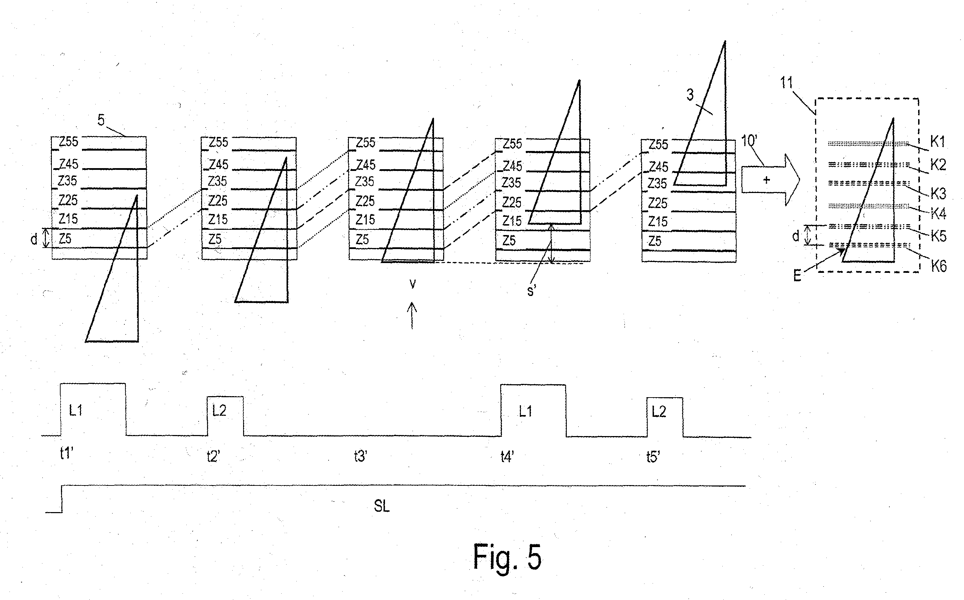

Unter Bezugnahme auf Fig. 5 wird nun gezeigt, wie mit dem erfindungsgemäßen Verfahren durch Auslesen einer größeren Anzahl an Sensorzeilen, als es unterschiedliche Beleuchtungen gibt, signifikante Vorteile erreicht werden können. In einem Anwendungsfall kann bei unveränderter Bildaufnahmefrequenz ein Vielfaches der Objektauflösung erreicht werden. Ein weiterer Anwendungsfall ermöglicht es, bei unveränderter Objektauflösung mit einem Bruchteil der Aufnahmefrequenz das Auslangen zu finden und damit eine Vervielfachung der Lichtpulsabstände und somit Lichtenergie einzusparen. Die Darstellung von Fig. 5 entspricht jener von Fig. 3 mit dem Unterschied, dass die Zeitabfolge t1' - t5' die doppelte Zeitspanne der in der Abfolge t1 - t5 von Fig. 3 darstellten Zeitabfolge darstellt. Dies ist auch daran erkennbar, dass die Strecke s', um die sich das Objekt 3 zwischen aufeinanderfolgenden Lichtpulsen mit der Fördergeschwindigkeit v fortbewegt, die doppelte Länge aufweist wie die Strecke s in Fig. 2, wie anhand der nachfolgenden Formeln dargestellt:

$$t2' - t1' = 2 \times (t2 - t1)$$

$$s' = 2 \times s$$

Weiters werden pro aufgenommenem Bild die doppelte Anzahl an Zeilen ausgelesen, als es unterschiedliche Beleuchtungen gibt, d.h. sechs Zeilen. Es sind dies die Zeilen Z5, Z15, Z25, Z35, Z45, Z55, die jeweils einen Zeilenabstand d von 10 Zeilen aufweisen, der wie oben beschrieben ermittelt wurde. Es gilt die vereinfachende Annahme, dass der Detektor lediglich 60 Zeilen aufweist.

Der von Fig. 3 verschiedenen Aufnahmesituation muss durch einen angepassten Kombinationsalgorithmus 10' Rechnung getragen werden. Dadurch, dass pro Beleuchtung (Lichtpuls L1, Lichtpuls L2, Sekundärlicht SL) doppelt so viele Sensorzeilen aufgenommen werden wie im ersten Beispiel, liefert auch der Kombinationsalgorithmus 10' für die selbe Anzahl von Lichtpulsen bzw. das Sekundärlicht doppelt so viele, bei unterschiedlicher Beleuchtung aufgenommene Zeilen wie im obigen Beispiel. Durch den Kombinatinosalgorithmus 10' werden nun die Zeile Z15 des bei Beleuchtung durch den intensiven Lichtpuls L1 zum Zeitpunkt t1' aufgenommenen Bildes mit der Zeile Z35 des bei Beleuchtung mit dem schwachen Lichtpuls L2 zum Zeitpunkt t2' aufgenommenen Bildes und der Zeile Z55 des bei Sekundärlicht SL zum Zeitpunkt t3' aufgenommenen Bildes zur Kombinationszeile K1 kombiniert. In analoger Weise werden die Zeilen Z5 von t1', Z25 von t2' und Z45 von t3' zu K2 kombiniert, Z15 von t2', Z35 von t3' und Z55 von t4' zu K3 kombiniert, Z5 von t2', Z25 von t3' und Z45 von t4' zu K4 kombiniert, Z15 von t3', Z35 von t4' und Z55 von t5' zu K5 kombiniert und
Z5 von t3', Z25 von t4' und Z45 von t5' zu K6 kombiniert. Die Kombinationszeilen K1, K2, K3, K4, K5, K6 etc werden zu einem Kombinations-Gesamtbild 11 zusammengesetzt.

**Patentansprüche**

1. Verfahren zum optischen Detektieren von mit einer Fördergeschwindigkeit (v) bewegten Objekten (3), **gekennzeichnet durch**:

- das Beleuchten des Objekts (3) entweder

mit einer Abfolge von Lichtpulsen (L1, L2) aus zumindest einer Pulslichtquelle (LQ1, LQ2, LQ3), wobei Lichtpulse (L1, L2) unterschiedliche Intensitäten und/oder unterschiedliche Pulsdauern aufweisen, oder mit einer Abfolge von Lichtpulsen (L1, L2) aus zumindest einer Pulslichtquelle (LQ1, LQ2, LQ3), wobei optional Lichtpulse unterschiedliche Intensitäten und/oder unterschiedliche Pulsdauern aufweisen, und mit Sekundärlicht (SL) aus einer Sekundärlichtquelle (LQ4, LQ5), deren Licht in Objekten (3) einen optisch detektierbaren Sekundäreffekt induziert;

- das Aufnehmen von Bildern des Objekts (3) während eines jeden Lichtpulses (L1, L2) mit einem monochromatischen optischen Flächensensor (5), z.B. CMOS-Sensor, der eine Vielzahl von Sensorzeilen aufweist, und gegebenenfalls das Aufnehmen von Bildern des Objekts (3) zwischen Lichtpulsen bei Sekundärlicht (SL);

- das Auslesen und Zwischenspeichern von Zeilen (Z5, Z15 .. Z55) eines jeden Bildes, wobei die ausgelesenen Zeilen einen Zeilenabstand (d) zueinander aufweisen, um den oder ein Vielfaches davon die Projektion (P) des Objekts (3) auf den Flächensensor (5) zwischen aufeinanderfolgenden Lichtpulsen (L1, L2) und gegebenenfalls Beleuchtung **durch** Sekundärlicht (SL) weiterwandert und der Zeilenabstand (d) bzw. dessen Vielfaches proportional zu jener Strecke (s, s') ist, um die sich das Objekt (3) zwischen aufeinanderfolgenden Lichtpulsen (L1, L2) und gegebenenfalls Beleuchtung **durch** Sekundärlicht (SL) mit der Fördergeschwindigkeit (v) fortbewegt;

- das sequentielle Kombinieren von Zeilen (Z5, Z15 .. Z55) aus bei Beleuchtung **durch** die Lichtpulse (L1, L2) und gegebenenfalls Beleuchtung **durch** das Sekundärlicht (SL) aufgenommenen Bildern zu Kombinationszeilen (K1 - K6), wobei die miteinander kombinierten Zeilen (Z5, Z15 .. Z55) zueinander den genannten Zeilenabstand (d) bzw. dessen Vielfaches aufweisen; und

- das Zusammensetzen der Kombinationszeilen (K1 - K6) zu einem Kombinations-Gesamtbild (11).

2. Verfahren nach Anspruch 1, **dadurch gekennzeichnet, dass** Lichtpulse (L1, L2) unterschiedliche Wellenlängen/Farben aufweisen.

3. Verfahren nach Anspruch 1 oder 2, **dadurch gekennzeichnet, dass** zumindest so viele Zeilen (Z5, Z15 .. Z55) eines jeden Bildes ausgelesen und zwischengespeichert werden, wie es sich voneinander in Intensität und/oder Pulsdauer und/oder Farben unterscheidende Lichtpulse (L1, L2) und gegebenenfalls Sekundärlicht (SL) gibt.

4. Verfahren nach Anspruch 3, **dadurch gekennzeichnet, dass** die Abfolge des Aufnehmens von Bildern des Objekts (3) bei Beleuchtung mittels der Lichtpulse (L1, L2) und gegebenenfalls in Pulspausen zwischen Lichtpulsen bei Sekundärlicht (SL) so eingestellt wird, dass die Projektion (P) des Objekts (3) zwischen zwei Lichtpulsen (L1, L2) bzw. Lichtpulsen und Lichtpausen um den Zeilenabstand (d) oder um ein ganzzahliges Vielfaches des Zeilenabstandes (d) zwischen den auszulesenden Zeilen (Z5, Z15, .. Z55) weiterwandert, wobei Zeilen (Z5, Z15 .. Z55) aus Bildern, die bei einer Abfolge von Beleuchtungen mittels in Intensität und/oder Pulsdauer und/oder Farben unterschiedlichen Lichtpulsen (L1, L2) und gegebenenfalls Sekundärlicht (SL) aufgenommen wurden, zu Kombinationszeilen (K1, K2, K3) sequentiell miteinander kombiniert werden, wobei die zu kombinierenden Zeilen (Z5, Z15 .. Z55) zueinander den Zeilenabstand (d) oder dessen Vielfaches aufweisen.

5. Verfahren nach Anspruch 3 oder 4, **gekennzeichnet durch** das Auslesen und Zwischenspeichern eines Vielfachen, zumindest des Doppelten, an Zeilen (Z5, Z15 .. Z55) eines jeden Bildes, wie es unterschiedliche Beleuchtungen gibt, die aus in Intensität und/oder Pulsdauer und/oder Farben unterschiedlichen Lichtpulsen (L1, L2) und gegebenenfalls Sekundärlicht (SL) resultieren, und das sequentielle Kombinieren jener monochromatischen Zeilen (Z5, Z15 .. Z55) zu Zwischenzeilen (I11, I12, I13; I21, I22, I23; I31, I32, I33), die bei gleichen Beleuchtungen zu verschiedenen Zeitpunkten aufgenommen wurden, unter Berücksichtigung des zeitlichen Abstandes zwischen den Bildaufnahmezeitpunkten und des Zeilenabstandes (d) innerhalb der Beleuchtungsabfolge, sowie das anschließende Kombinieren der Zwischenzeilen (I11, I12, I13; I21, I22, I23; I31, I32, I33), die unterschiedlichen Beleuchtungen zugeordnet sind, unter Berücksichtigung des Zeilenabstandes (d) zu Kombinationszeilen (K1, K2, K3), und das Zusammensetzen der Kombinationszeilen (K1, K2, K3) zu einem Kombinations-Gesamtbild (11).

6. Verfahren nach einem der vorhergehenden Ansprüche, **dadurch gekennzeichnet, dass** als Pulslichtquellen (LQ1, LQ2, LQ3) schnell schaltende, schmalbandige bis monochromatische Lichtquellen, vorzugsweise Leuchtdioden oder Laser, verwendet werden.

7. Verfahren nach einem der Ansprüche 1 bis 6, **dadurch gekennzeichnet, dass** die Sekundärlichtquelle (LQ4, LQ5) eine UV- oder UV-C-Lichtquelle ist, die Objekte (3) zur Lumineszenz anregt.

8. Verfahren nach einem der Ansprüche 1 bis 6, **dadurch gekennzeichnet, dass** die Sekundärlichtquelle (LQ4, LQ5) eine Lichtquelle mit hohem Wärmestrahlungsanteil ist, die Objekte (3) zur Wärmeabsorption anregt.

9. Verfahren nach einem der vorhergehenden Ansprüche, **dadurch gekennzeichnet, dass** die Objekte (3) durch Filtern mit schmalbandigem Licht angestrahlt werden.

10. Verfahren nach einem der vorhergehenden Ansprüche, **dadurch gekennzeichnet, dass** das Objekt (3) auf einer transparenten Fördereinrichtung (2) bewegt wird und die Beleuchtung des Objekts durch die Fördereinrichtung (2) hindurch erfolgt, wobei der optische Flächensensor (5) auf derselben Seite der Fördereinrichtung (2) wie das Objekt (3) positioniert ist.

11. Beleuchtungseinrichtung (20) zur Bestrahlung von mit einer Fördergeschwindigkeit (v) bewegten Objekten (3), **gekennzeichnet durch** zumindest eine Pulslichtquelle (LQ1, LQ2, LQ3) und optional zumindest eine Sekundärlichtquelle (LQ4, LQ5), deren Licht in Objekten (3) einen optisch detektierbaren Sekundäreffekt induziert, und **durch** ein Gehäuse (21), in dem alle Lichtquellen aufgenommen sind und das einen Lichtauslass (23) zum Durchtritt des von den Lichtquellen (LQ1, LQ2, LQ3, LQ4, LQ5) generierten Lichts aufweist, wobei der Lichtauslass (23) **durch** zumindest ein Filterglas (24) abgedeckt ist, das Licht der im Gehäuse angeordneten Lichtquellen mit Ausnahme von für die Detektion notwendigen Lichtanteilen breitbandig dämpft.

12. Beleuchtungseinrichtung nach Anspruch 11, **dadurch gekennzeichnet, dass** die Pulslichtquellen (LQ1, LQ2, LQ3) betreibbar sind, um Lichtpulse (L1, L2) unterschiedlicher Intensitäten und/oder unterschiedlicher Pulsdauern zu erzeugen.

13. Beleuchtungseinrichtung nach Anspruch 11 oder 12, **dadurch gekennzeichnet, dass** die Pulslichtquellen (LQ1, LQ2, LQ3) schnell schaltende, schmalbandige bis monochromatische Lichtquellen, vorzugsweise Leuchtdioden oder Laser, sind.

14. Beleuchtungseinrichtung nach einem der Ansprüche 11 bis 13, **dadurch gekennzeichnet, dass** die Sekundärlichtquelle (LQ4, LQ5) eine UV- oder UV-C-Lichtquelle ist.

15. Beleuchtungseinrichtung nach einem der Ansprüche 11 bis 14, **dadurch gekennzeichnet, dass** die Lichtquellen (LQ1, LQ2, LQ3, LQ4, LQ5) Licht von unterschiedlicher Wellenlänge/Farbe erzeugen.

16. Vorrichtung zum optischen Detektieren von mit einer Fördergeschwindigkeit (v) bewegten Objekten (3), mit einer Fördereinrichtung (2) zur Förderung der Objekte (3), **gekennzeichnet durch** eine Beleuchtungseinrichtung (20) nach einem der Ansprüche 11 bis 15, einen monochromatischen optischen Flächensensor (5), z.B. CMOS-Sensor, der eine Vielzahl von Sensorzeilen aufweist, und einen Rechner (6) zur Steuerung des Flächensensors (5) und der Beleuchtungseinrichtung (20), wobei der Rechner (6) dazu ausgebildet ist, das Verfahren nach einem der Ansprüche 1 bis 10 abzuarbeiten.

17. System nach Anspruch 16, **dadurch gekennzeichnet, dass** die Fördereinrichtung (2) lichtdurchlässig ist und die Beleuchtungseinrichtung (20) und der Flächensensor (5) auf gegenüberliegenden Seiten der Fördereinrichtung (2) positioniert sind.

18. System nach Anspruch 16 oder 17, **dadurch gekennzeichnet, dass** der Rechner (6) zur Ansteuerung (CTR) einer Sortieranlage (9) ausgebildet ist.

Fig. 1

Fig. 2

EP 2 236 220 A2

Z25
Z15
Z5
d

5 Z25
Z15
Z5

Z25
Z15
Z5

v

Z25
Z15
Z5

s

Z25
Z15
Z5

3

10
+

11
K1
K2
K3
d
E

L1
t1

L2
t2

t3

L1
t4

L2
t5

SL

## Fig. 3

Fig. 5

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- AT 410847
- AT 503036 B1

- AT 004889 U1